(19) Europäisches Patentamt
European Patent Office
Office européen des brevets

(11) **EP 3 253 037 B1**

(12) **EUROPÄISCHE PATENTSCHRIFT**

(45) Veröffentlichungstag und Bekanntmachung des Hinweises auf die Patenterteilung:
**01.05.2024 Patentblatt 2024/18**

(21) Anmeldenummer: **17173233.2**

(22) Anmeldetag: **29.05.2017**

(51) Internationale Patentklassifikation (IPC):
**H04M 3/42** *(2006.01)* **H04M 7/00** *(2006.01)*
**H04L 51/56** *(2022.01)*

(52) Gemeinsame Patentklassifikation (CPC):
**H04M 3/42263; H04L 51/56; H04M 3/42272;**
H04M 3/42153; H04M 7/0033

(54) **VERFAHREN ZUM INTEGRIEREN EINES KOMMUNIKATIONSENDGERÄTS ALS BEVORZUGTES GERÄT IN EINE STATISCHE KONFIGURATION EINES KOMMUNIKATIONSSYSTEMS SOWIE EIN HIERFÜR AUSGEBILDETES KOMMUNIKATIONSSYSTEM**

METHOD FOR INTEGRATING A COMMUNICATION DEVICE AS PREFERRED DEVICE IN A STATIC CONFIGURATION OF A COMMUNICATIONS SYSTEM AND AN APPROPRIATE COMMUNICATION SYSTEM

PROCÉDÉ D'INTÉGRATION D'UN ÉMETTEUR DE COMMUNICATION EN TANT QUE APPAREIL PRÉFÉRÉ DANS UNE CONFIGURATION STATIQUE D'UN SYSTÈME DE COMMUNICATION ET SYSTÈME DE COMMUNICATION AINSI CONÇU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.05.2016 DE 102016109938**

(43) Veröffentlichungstag der Anmeldung:
**06.12.2017 Patentblatt 2017/49**

(73) Patentinhaber: **Unify Patente GmbH & Co. KG**
**81739 München (DE)**

(72) Erfinder:
- **RIST, Claus**
  **44797 Bochum (DE)**
- **SCHWARTZE, Jürgen**
  **58239 Schwerte (DE)**
- **NEUHAUS, Ralf**
  **44534 Lünen (DE)**

(74) Vertreter: **Schaafhausen Patentanwälte PartGmbB**
**Prinzregentenplatz 15**
**81675 München (DE)**

(56) Entgegenhaltungen:
**DE-A1-102013 008 932     US-A1- 2006 177 030**

- **Unify Software And Solutions Gmbh & Co. Kg: "ONS - Experts Wiki", , 5 April 2016 (2016-04-05), XP055681238, Retrieved from the Internet: URL:https://wiki.unify.com/wiki/ONS [retrieved on 2020-03-31]**
- **Unify Deutschland: "One Number Service", Youtube, 3 December 2015 (2015-12-03), page 1 pp., XP054980353, Retrieved from the Internet: URL:https://www.youtube.com/watch?v=KTTNI U 21Tvg [retrieved on 2020-03-31]**

**Beschreibung**

Die vorliegende Erfindung betrifft ein Verfahren zum Integrieren eines Kommunikationsendgeräts als bevorzugtes Gerät in eine statische Konfiguration, ein Computerprogrammprodukt zur Implementierung des Verfahrens, einen maschinenlesbaren Datenträger mit darauf gespeichertem Computerprogrammprodukt sowie ein entsprechende Kommunikationssystem.

Für die folgende Beschreibung seien folgende Begriffe kurz erläutert:
Eine Telekommunikationsplattform (kurz auch TK-Plattform) ist beispielsweise eine Vermittlungsstelle oder eine Telekommunikationsanlage (auch als PBX bzw. "Private Branch Exchange" bezeichnet). Solche TK-Plattformen bieten meist SIP-basierte VoIP/Videoover-IP-Technologien an. Ein Telefonie-Endpunkt ist beispielsweise ein Telefon, Smartphone, ein Computer zur Nutzung beim Aufbau oder Betrieb einer Telefonverbindung bzw. "Call" oder einer Datenverbindung, oder ein anderes - ggf. virtuelles - Endgerät.

Ein Cloud-Kommunikationsserver (CKS) ist beispielsweise eine SaaS-Cloud-Plattform für die teamübergreifende Zusammenarbeit. Hier erhalten Teams, was sie für eine effektive Kommunikation benötigen, in einem einzigen Client (kurz auch CKS-Client).

Ein CKS-Client ist beispielsweise eine Anwendungssoftware (App), mit der u.a. Sprache, Video, Screensharing, Messaging, Chat und Dateifreigabe vereint werden und ermöglicht somit eine problemlose und vereinfachte Zusammenarbeit. Ein derartiger CKS-Client eines Cloud-Kommunikationsservers ist meist auf Basis der WebRTC-Technologie realisiert und kann beispielsweise auf einem (Telefonie-)Endpunkt installiert sein.

Ferner seien die folgenden Abkürzungen erläutert:

| | |
|---|---|
| API: | Application Programming Interface |
| App: | Applikation, Anwendungssoftware/-umgebung, Software, Webanwendung |
| CKS: | Cloud-Kommunikationsserver |
| CSTA: | Computer Supported Telecommunications Applications(ECMA) |
| CTI: | Computer Telephony Integration (z.B. CSTA, TAPI) |
| ECMA: | Ecma International - Standardisierungsgremium |
| ONS: | One Number Service (im eigenen/fremden Firmennetz) |
| PBX: | Telekommunikationsanlage, Telekommunikationsplattform, Switch |
| PD: | Preferred Device, bevorzugtes (Kommunikationsend-)Gerät |
| SIP: | Session Initiation Protocol |
| TAPI: | Telephony Applications Interface (Microsoft) |
| UC: | Unified Communication |
| WebRTC: | Web Real-Time Communication |

Beim One Number Service ist es egal, wo sich ein Benutzer befindet. Der Benutzer kann stets über die eine Telefonnummer erreicht werden, die der Benutzer anderen Personen mitgeteilt hat. Über den One Number Service (ONS) leitet eine UC-Applikation alle Anrufe des Benutzers an sein bevorzugtes Gerät (Preferred Device) weiter. Der Benutzer entscheidet, welchen Endpunkt (Telefon) er für seine Kommunikation verwenden möchte (beispielsweise Bürotelefon, Mobiltelefon, Telefon im eigenen/fremden Firmennetz, privates Telefon, Konferenzraum, Telefon im öffentlichen Raum, CKS-Client).

Unified Communication (UC) betrifft die Integration von Kommunikationsmedien wie Sprache, Video, Screensharing, Messaging, Chat und Dateifreigabe in einer einheitlichen Anwendungsumgebung, um eine problemlose und vereinfachte Zusammenarbeit zu ermöglichen.

Lösungen für Unified Communications (UC) zeichnen sich dadurch aus, dass ein UC-Benutzer (nachfolgend auch als User bezeichnet) über verschiedene Kommunikationsmedien (fachsprachlich meist als Devices bezeichnet) erreichbar ist. Situationsabhängig möchte er festlegen, ob und über welche Medien bzw. Devices er erreichbar sein möchte. Eine wesentliche Klasse von Devices bilden nach wie vor Telefone (Festnetz und Mobil). Im Allgemeinen hat ein UC-User mehrere solcher Devices. Aus Sicht des Kommunikationssystems sind einige dieser Devices extern über Gateways angeschaltet und können im Kommunikationssystem als virtuelle Devices abgebildet werden.

Das UC-Leistungsmerkmal "One Number Service" (auch mit ONS abgekürzt) ist von entscheidender Bedeutung, weil es vor den Kommunikationspartnern verbirgt, an welchem Ort sich der UC-User gerade befindet und über welches konkrete Device er gerade kommuniziert. Es stellt sich also die Frage, wie man Folgendes erreichen kann:

- die Zuordnung von UC-Usern zu den ihnen zugeordneten Devices herstellen,
- die Device-Zuordnung (insbesondere für die externen) dynamisch ändern,
- das oder die aktive(n) Device(s) aktivieren/deaktivieren und
- gleichzeitig die Komplexität dieser Zuordnungen vor den Applikationen verbergen, um den allgemeinen Realisierungsaufwand gering zu halten.

Im Zusammenhang mit der vorliegenden Erfindung sind folgende Praxisbeispiele (auch als Use Cases bezeichnet) zu nennen:

Einem UC-User sind folgende Devices zugeordnet, für die ein One Number Service bereitgestellt werden soll:

- Systemtelefon, direkt an das Kommunikationssystem angeschlossen
- Mobiltelefon, über ein Gateway an das Kommunikationssystem extern angeschaltet,
- Homeoffice-Telefon, über ein Gateway an das Kommunikationssystem extern angeschaltet.
- CKS-Client, über einen Cloud-Kommunikationsserver zugeordneter Client

Orts- bzw. situationsabhängig möchte der UC-User gerufen werden:

- Wenn er im Büro ist: Über das Systemtelefon und das Mobiltelefon (weil er nicht immer an seinem Schreibtisch ist), nicht jedoch über das Homeoffice-Telefon.
- Wenn er im Homeoffice ist: Nur über das Homeoffice-Telefon.
- Wenn er unterwegs ist: Nur über das Mobiltelefon (Bürozeiten), ansonsten Umleitung zur Voice-Mail. In bestimmten Situationen soll jedoch nicht die Mobilrufnummer als externes Device gerufen werden, sondern eine alternative externe Rufnummer (z.B. Hotel).

Es gibt hierzu im Stand der Technik Lösungen, die aber nicht alle oben genannten Forderungen gleichzeitig voll erfüllen können und überdies sehr komplex zu realisieren sind:

In dem Gebrauchsmuster DE 20 2011 003 225 U1 und in der Patentanmeldung WO 2014/060008 A1 wird die Möglichkeit beschrieben, für einen Teilnehmer oder eine Gruppe von Teilnehmern ein virtuelles Endgerät zu verwalten. Hierbei besitzt beispielsweise ein Benutzer einer Telefonanlage ein Mobiltelefon (ggf. mit GSM- und WLAN-Anbindung). Dieses Mobiltelefon ist zunächst nicht in die anlagenspezifischen Kommunikationsszenarien integriert. Der Benutzer kann beispielsweise Gespräche auf dem Mobiltelefon nicht an andere Teilnehmer des Kommunikationssystems weitervermitteln oder Gespräche von einem anderen Teilnehmer des Kommunikationssystems übernehmen. Hierfür bieten DE 20 2011 003 225 U1 und WO 2014/060008 A1 eine vollständig in das Kommunikationssystem integrierte Abhilfe, für die auch keine zusätzliche Hardware benötigt wird. Anrufe an das und von dem Mobiltelefon werden über einen internen (virtuellen) Teilnehmer des Kommunikationssystems vollständig assoziiert.

Bei den von Unify implementierten Verfahren zur Bereitstellung des One Number Service mittels UC-Applikation wird vornehmlich auf eine in ECMA-269 beschriebene Definition zurückgegriffen, bei der der User sein Device aus einem logischen und einen physikalischen Anteil bildet. Der logische Anteil wird durch die One-Number-Service-Nummer und der physikalische Anteil durch das Preferred Device gebildet. In den meisten Fällen ist die One-Number-Service-Nummer äquivalent mit dem Deskphone des Users. Das Preferred Device nutzt der User, um Anrufe unter seiner One-Number-Service-Nummer derart durchzuführen, dass die Anschlussnummer des Preferred Device dem Gesprächspartner verborgen bleibt. Stattdessen sieht der Gesprächspartner immer eine Verbindung zur One-Number-Service-Nummer.

Die Realisierung des One Number Service gemäß DE 20 2011 003 225 U1 und WO 2014/060008 A1 ist äußerst komplex und aufwendig zu implementieren. Dies betrifft insbesondere auch den Aufwand in der clientseitigen Applikationssoftware, da jegliche Änderungen von Zuordnungen aktiver (Preferred) Devices von jeder Clientsoftware aktiv verarbeitet werden müssen. Der hier vorgestellte Ansatz soll diese Komplexität signifikant reduzieren. Die Einbindung eines externen Devices in das Kommunikationssystem und des One Number Service soll dynamisch, aus Sicht der clientseitigen Applikationssoftware aber transparent erfolgen. Wenn die zugeordnete Rufnummer temporär geändert wird (z.B. Hotelszenario), so hat dieses keine Auswirkungen auf die Applikationssoftware, insbesondere nicht auf die Steuerung bzw. das Monitoring des entsprechenden virtuellen Devices.

Darüber hinaus ist das Konzept gemäß DE 20 2011 003 225 U1 und WO 2014/060008 A1 mit Einschränkungen verbunden hinsichtlich der Flexibilität: Diese bekannte Realisierung sieht nicht vor, mehrere Endgeräte - als Untermenge aller dem User zugeordneter Devices - gleichzeitig als Preferred Devices zu nutzen.

WO 2007/000447 A1 offenbart ein System zum Signalisieren von vermittlungstechnischen Zuständen zwischen einem in einer Kommunikationseinrichtung vorgesehenen Teammodul MULAP, dem mehrere Endgeräte E1...En eines Teilnehmers T zugeordnet sind, und einem das Teammodul MULAP vermittlungstechnisch steuernden Kommunikationsmodul ComAss, wobei im Teammodul MULAP die vermittlungstechnischen Zustände der Endgeräte E1...E3 des Teilnehmers T erfasst werden. Das System zeichnet sich dadurch aus, dass im Teammodul MULAP und im Kommunikationsmodul ComAss den Endgeräten E1...En eines Teilnehmers T ein logisches Endgerät LE zugeordnet wird, dass aus den erfassten vermittlungstechnischen Zuständen der Endgeräte E1...E3 der vermittlungstechnische Zustand v des Teilnehmers T ermittelt und im logischen Endgerät LE des Teammoduls MULAP eingetragen wird, und dass dem Kommunikationsmodul ComAss der im logischen Endgerät LE eingetragene vermittlungstechnische Zustand v des Teilnehmers T signalisiert wird.

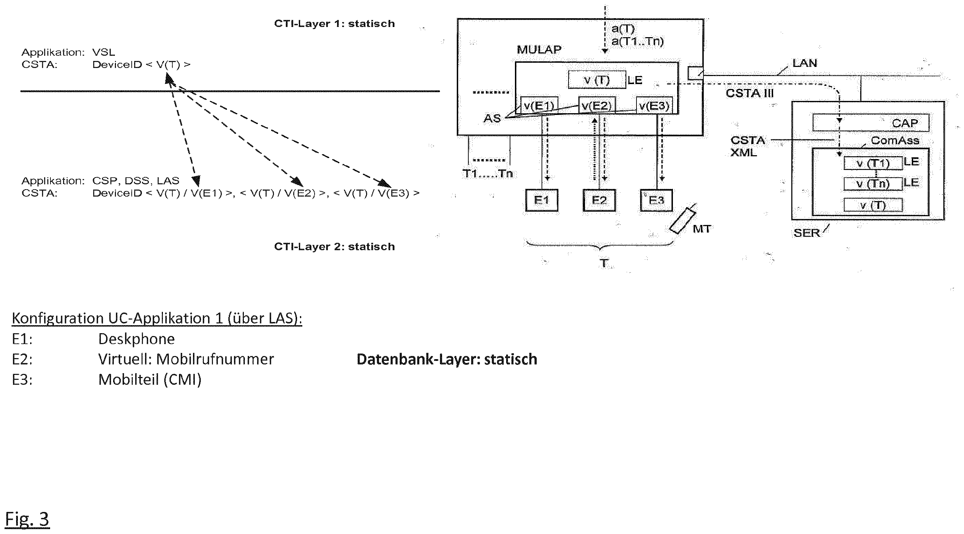

Bei WO 2007/000447 A1 wird somit eine Team-Konfiguration eines Teilnehmers T mit dessen statisch konfigurierten Endgeräten E1, E2, E3 über zwei statische CTI-Layer abgebildet, was in Fig. 3 dargestellt ist.

CTI-Layer 2 zeigt die statische Verknüpfung des Teilnehmers T mit dem jeweils verknüpften Endgerät E1, E2 oder E3. Dieses wird heute innerhalb der OSBiz von folgenden Applikationen genutzt:

Middleware-Komponente: CSTA Service Provider - CSP
Direct Station Select Server (App zur knotenübergreifenden LED-Signalisierung von Teilnehmerzuständen) - DSS
Embedded UC-Server - LAS

CTI-Layer 1 projiziert bzw. verdichtet für High-Level-Applikationen den Zustand des genutzten Endgerätes E1, E2 oder E3 auf den Zustand des statischen Teilnehmers T. Dabei wird das variabel genutzte Endgerät aus einer statischen Konfiguration ausgewählt. Der Teilnehmer T ist somit im mathematischen Sinne eine Funktion des genutzten Endgerätes E1, E2 oder E3.

$$T = f(E1, E2, E3) - \text{endliche Liste}$$

Dieses wird heute innerhalb der OSBiz von folgenden Applikationen genutzt:

UC Server - "UC Suite"

Dieses Verfahren setzt eine statische Zuordnung des Teilnehmers T zu dessen genutzten Endgeräten E1, E2 oder E3 voraus (da beispielsweise das Endgerät E3 in mehreren Teams genutzt werden kann, müssten für eine E3-Änderung zur Laufzeit sämtliche betroffenen Monitorpunkte zu allen Applikationen aktualisiert werden - dies ist sehr aufwendig und komplex).

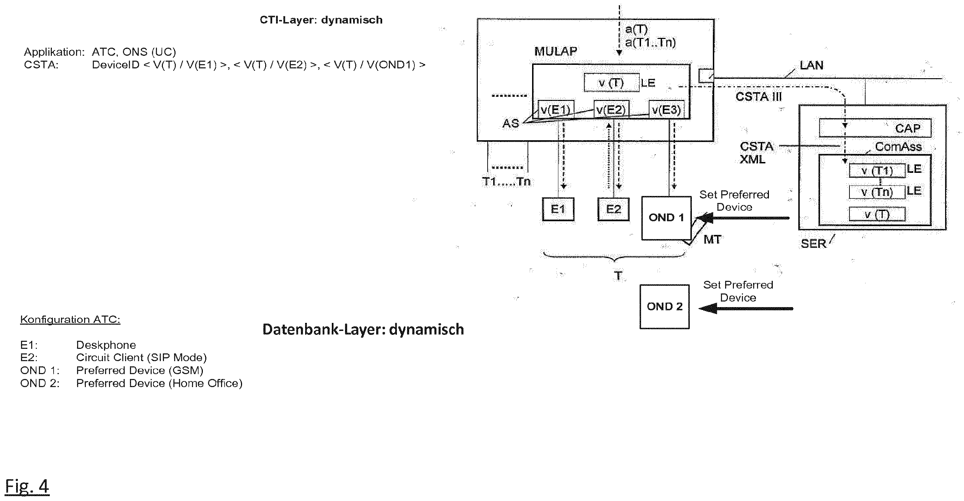

Beim One Number Service (ONS) wählt ein Teilnehmer T dynamisch sein Deskphone E1 oder seinen Circuit Client E2 (CKS-Client) oder ein beliebiges Preferred Device OND 1, OND 2 aus. Bei Circuit handelt es sich um den Cloud-Kommunikationsserver der Firma Unify. Das dynamisch ausgewählte Endgerät nutzt der Teilnehmer T, um Anrufe unter seiner One-Number-Service-Nummer derart durchzuführen, dass die Anschlussnummer des jeweiligen Preferred Device dem Gesprächspartner verborgen bleibt. Stattdessen sieht der Gesprächspartner immer eine Verbindung zur One-Number-Service-Nummer. Dieses CSTA-Modell gemäß One Number Service ist in Fig. 4 dargestellt. Der hierfür verwendete CTI-Layer passt sich an das jeweils gewählte Preferred Device an und zeigt dynamisch die Verknüpfung des Teilnehmers T mit dem jeweiligen Endgerät E1, E2, OND 1 oder OND 2 auf. Der Teilnehmer T ist somit im mathematischen Sinne eine Funktion des genutzten Preferred Device.

$$T = f(\text{Preferred Device}) - \text{unendliche Liste}$$

Dieses wird heute beispielsweise von zahlreichen Applikationen genutzt.

Dieses Verfahren setzt eine dynamische Zuordnung des Teilnehmers T zu dessen genutzten Endgeräten bzw. Preferred Devices E1, E2, OND 1 oder OND 2 voraus. Die Applikationen müssen die dynamische Änderung nachziehen.

US 2006/177030 A1 D1 offenbart ein Verfahren zum Routen einer Kommunikation zu einem bevorzugten Gerät eines Nutzers. Dabei empfängt ein Service Center Informationen, die eine Kommunikation zwischen einem Anrufer und einem Angerufenen bzw. Nutzer betreffen und ruft unter Verwendung dieser Information Daten ab, die sich auf den Nutzer beziehen. Basierend auf den abgerufenen Daten bestimmt das Service Center dann das dem Nutzer zugeordnete bevorzugte Gerät und routet die Kommunikation entsprechend auf das bevorzugte Gerät.

XP054980353 (Unify Deutschland: "One Number Service", Youtube, 3. Dezember 2015) zeigt eine Bedienoberfläche für einen One Number Service).

DE 10 2013 008932 A1 offenbart den Einsatz eines CTI-Servers für einen One Number Service.

Der vorliegenden Erfindung liegt die Aufgabe zugrunde, ein vereinfachtes Verfahren zum Integrieren eines Kommunikationsendgeräts als bevorzugtes Gerät in eine statische Konfiguration, ein entsprechendes Computerprogramm(-produkt) zur Implementierung des Verfahrens, einen maschinenlesbaren Datenträger mit darauf gespeichertem Computerprogrammprodukt sowie ein entsprechendes Kommunikationssystem anzugeben.

Diese Aufgabe wird gelöst mit einem Verfahren zum Integrieren eines Kommunikationsendgeräts als bevorzugtes Gerät in eine statische Konfiguration gemäß Anspruch 1, einem Computerprogrammprodukt zur Implementierung des Verfahrens gemäß Anspruch 8, einem maschinenlesbaren Datenträger mit darauf gespeichertem Computerprogrammprodukt gemäß Anspruch 9, sowie einem entsprechenden Kommunikationssystem gemäß Anspruch 10.

Vorteilhafte Weiterbildungen der Erfindung sind Gegenstand der abhängigen Ansprüche.

Die vorliegende Erfindung sieht vor, die dem UC-User zugeordneten physikalischen und virtuellen Devices in einer vorteilhaften Gruppenkonfiguration (Group/MULAP) zu bündeln, wobei jedes einzelne Device gezielt aktiv bzw. inaktiv geschaltet werden kann, um ggf. mehrere Preferred Devices gleichzeitig (als Untermenge aller Devices) zu verwenden.

Betrachtung der Erfindung aus UC-Applikationssicht:

In Unified-Communications-Lösungen wird die Rolle des UC-Users gewöhnlich von einzelnen Kommunikationsendgeräten entkoppelt. Dies erlaubt es, sowohl verschiedene Kommunikationsmedien (E-Mail, Messaging, Telefone) zu nutzen als auch ggf. mehrere Devices der gleichen Art (z.B. mehrere Telefone) flexibel zu nutzen. Dabei wird die Vielfalt der genutzten Devices vor dem Kommunikationspartner verborgen (daher auch der Name One Number Service).

Bei der vorliegenden Erfindung dient die Rufnummer einer dem Nutzer persönlich zugeordneten Gruppe (Group) mit bestimmten Eigenschaften (z.B. nach Stand der Technik: Multiple Line Appearance = MULAP) als Rufnummer des One Number Service. Die Group/MULAP kann mehrere physikalische und virtuelle Devices enthalten. Dynamische Änderungen zugeordneter Rufnummern zu virtuellen Devices werden genutzt, um transparent für die clientseitigen UC-Applikationen flexibel alternative (insbesondere auch externe) Devices einzubinden, ohne dass die UC-Applikationen darauf reagieren müssen (z.B. durch Änderung des Device-Monitorings, etc.). Anstelle der Beschränkung auf ein einziges Preferred Device kann die UC-Applikation über eine geeignete Schnittstelle zum Kommunikationssystem jedes einzelne Device der Group/MULAP aktiv bzw. inaktiv schalten und dadurch Untermengen von mehreren Devices bilden, die zu einem bestimmten Zeitpunkt als Preferred Devices aktiv sind.

Die Auswahl des/der Preferred Device(s) erfolgt vorzugsweise aus der UC-Applikation heraus. Nutzt der User mehrere UC-Clients (z.B. Desktop und mobil), so kann mit einem beliebigen Client die Änderung der/des Preferred Device(s) bzw. der dynamischen Zuordnung eines virtuellen Devices zu einer (insbesondere auch externen) Rufnummer erfolgen, ohne dass alle Clients dynamisch darauf reagieren müssen, z.B. durch Änderungen am Monitoring.

Eine vorteilhafte Weiterbildung des erfindungsgemäßen Verfahrens erfolgt das Integrieren des bevorzugten Geräts und/oder die dynamische Zuordnung des bevorzugten Gerätes durch mindestens eine erste UC-Applikation, vorzugsweise rückwirkungsfrei, auf die zugeordnete Konfiguration. Dies ermöglicht es Teilnehmer T sein Deskphone E1 oder ein beliebiges Preferred Device OND 1, OND 2 dynamisch auszuwählen und gleichzeitig seine high-level Applikation ohne weitere Synchronisation rückwirkungsfrei zu bedienen. Der hierzu definierte CTI-Layer 3 passt sich an das jeweils gewählte Preferred Device an und zeigt dynamisch die Verknüpfung des Teilnehmers T mit dem jeweiligen Preferred Device E1, OND 1 oder OND 2 auf, wobei hingegen CTI-Layer 2 die Verknüpfung des statischen (virtuellen) Teilnehmers E2 mit dem jeweils dynamisch verknüpften Preferred Device zeigt. Der CTI-Layer 1 kondensiert weiterhin für high-level Applikationen den Zustand des genutzten Endgerätes E1, E2, OND 1 oder OND 2 auf den Zustand des statischen Teilnehmers T und erlaubt somit den gleichzeitigen und rückwirkungsfreien Betrieb von Applikationen auf den CTI-Layern 1 - 3.

Bei einer vorteilhaften Weiterbildung des erfindungsgemäßen Verfahrens erfolgt das Integrieren des bevorzugten Geräts OND 1 und/oder die dynamische Zuordnung des bevorzugten Gerätes OND 1, OND 2 rückwirkungsfrei auf die gesamte Anwendungsumgebung, die mindestens eine zweite Applikations-Software umfasst. Dadurch besteht der Vorteil, dass eine statische Zuordnung des Teilnehmers T zu dessen genutzten Endgeräten E1 und E2 bei gleichzeitiger dynamischer Zuordnung eines Preferred Device eine Änderung des Preferred Device zur Laufzeit ermöglicht ohne sämtliche betroffenen Monitorpunkte aller Applikationen auf den CTI-Layern 1 - 3 zu aktualisieren.

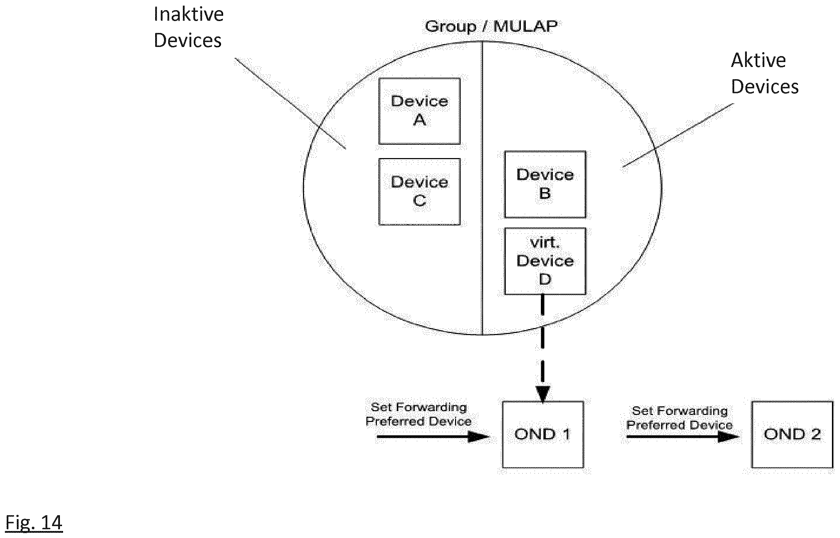

Bei einer vorteilhaften Weiterbildung des erfindungsgemäßen Verfahrens erfolgt das Integrieren des bevorzugten Geräts OND 1 und/oder die dynamische Zuordnung des bevorzugten Gerätes OND 1, OND 2 mittels Set- und Get-Funktionen, insbesondere mittels Set/GetForwarding, einer Applikations-Software. Dadurch besteht der Vorteil, dass die UC-Applikation über eine geeignete Schnittstelle zum Kommunikationssystem dem bzw. den virtuellem bzw. virtuellen Device(s) der Group/MULAP mittels Set- und Get-Funktionen, insbesondere mittels Set/GetForwarding aktiv bzw. inaktiv schalten kann und dadurch Untermengen von mehreren Devices bilden, die zu einem bestimmten Zeitpunkt als Preferred Devices OND 1 und/oder OND 2 aktiv sind (siehe Fig. 14).

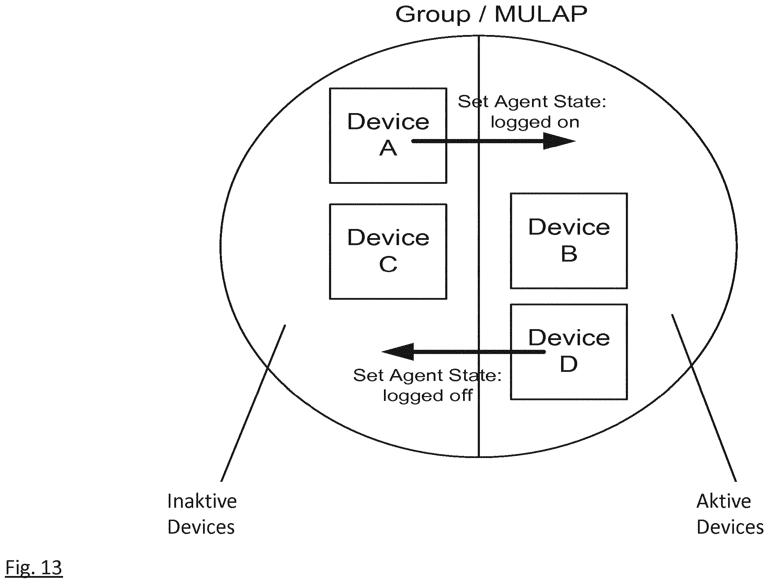

Bei einer vorteilhaften Weiterbildung des erfindungsgemäßen Verfahrens werden Geräte OND 1, OND 2 mittels Set-und Get-Funktionen, insbesondere mittels Set/GetAgentState, einer Applikations-Software aktiviert und deaktiviert und dadurch beliebige Untermengen der bereits zugeordneten statischen Konfiguration gebildet. Hierdurch besteht der Vorteil, dass die UC-Applikation über eine geeignete Schnittstelle zum Kommunikationssystem ein oder mehrere Device(s) der Group/MULAP mittels Set- und Get-Funktionen, insbesondere mittels Set/GetAgentState aktiv bzw. inaktiv schalten kann und dadurch Untermengen von mehreren Devices bilden, die zu einem bestimmten Zeitpunkt aktiv sind (siehe Fig. 13)

Bei einer vorteilhaften Weiterbildung des erfindungsgemäßen Verfahrens bedingt das Aktivieren bzw. Deaktivieren eines bevorzugten Geräts OND 1, OND 2 das automatische Deaktivieren bzw. Aktivieren anderer zugeordneter Geräte. Hierdurch besteht der Vorteil, dass die UC-Applikation über eine geeignete Schnittstelle zum Kommunikationssystem ein oder mehrere Device(s) der Group/MULAP mittels Set- und Get-Funktionen, insbesondere mittels Set/GetAgentState aktiv bzw. inaktiv schalten kann und dadurch implizit ein oder mehrere andere Devices der Group/MULAP automatisch inaktiv bzw. aktiv geschaltet werden.

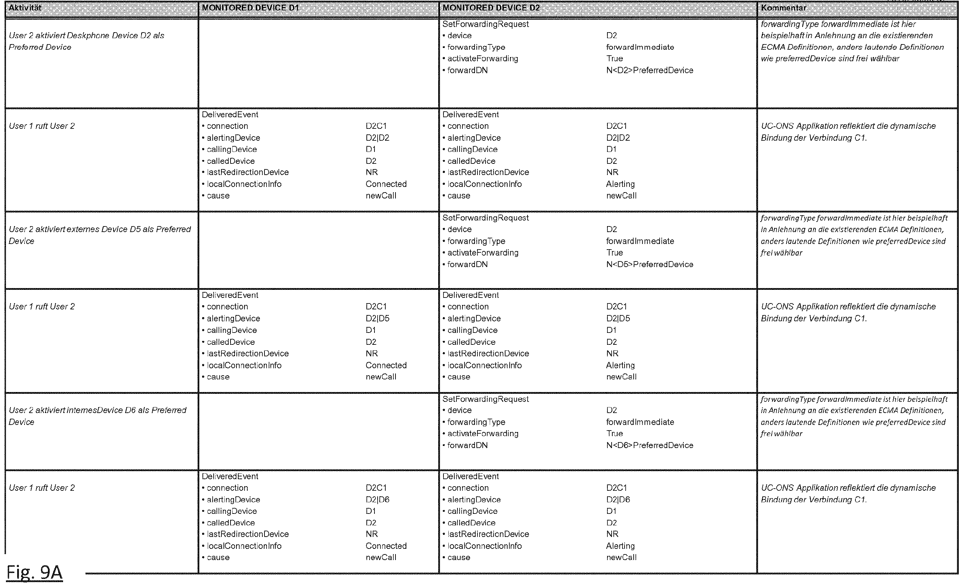

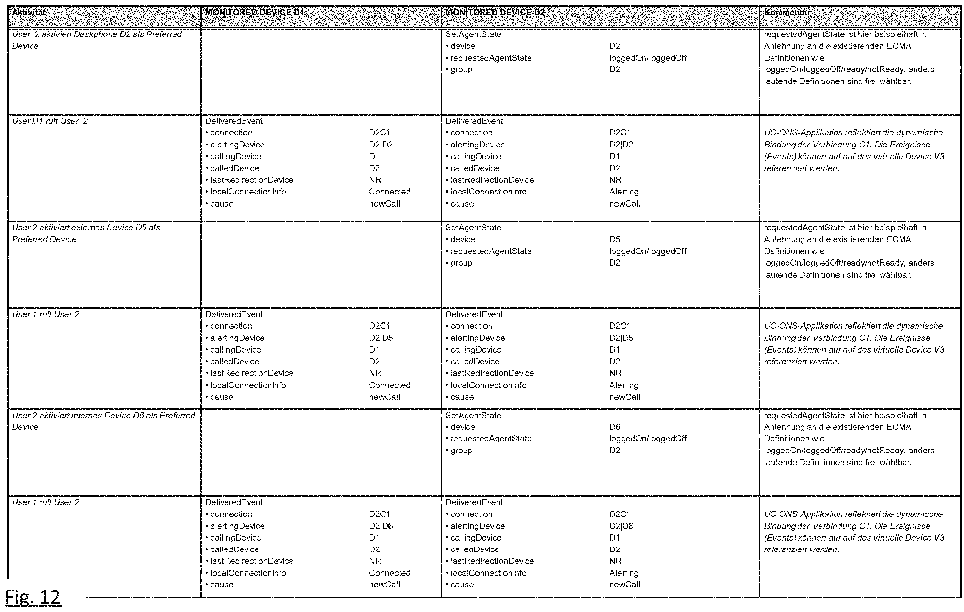

Bei einer vorteilhaften Weiterbildung des erfindungsgemäßen Verfahrens erfolgt die dynamische Verknüpfung und die Aktivierung bzw. Deaktivierung eines bevorzugten Geräts OND 1, OND 2 auf einer eigenen, vorzugsweise in sich geschlossenen, Darstellungsebene erfolgt, die insbesondere als CTI-Layer entsprechend einem virtuellen Gerät ausgebildet ist. Hierdurch besteht der Vorteil, dass die Auswahl des Preferred Devices OND 1 und/oder OND 2 sowie die Bildung von Untermengen mehrerer Devices durch deren Aktivierung bzw. Inaktivierung auf einem eigenen CTI-Layer 3 erfolgt (siehe Fig. 9A und Fig. 12), und unabhängig von den aus Sicht der Applikation transparenten CTI-Layern 1 und 2 sind.

Als zur vorliegenden Erfindung gehörig wird auch ein das erfindungsgemäße Verfahren implementierendes Computerprogramm sowie ein zur Speicherung dieses Computerprogramms verwendbarer maschinenlesbarer Datenträger angesehen.

Weitere Vorteile, Merkmale und Besonderheiten der vorliegenden Erfindung ergeben sich aus der nachfolgenden Beschreibung vorteilhafter Ausführungsformen unter Bezugnahme auf die Zeichnung. Es zeigen schematisch:

| | |
|---|---|
| Fig. 1 | eine erste Übersichtsanordnung einer erfindungsgemäßen Konfiguration, |
| Fig. 2 | eine zweite Übersichtsanordnung einer erfindungsgemäßen Konfiguration, |
| Fig. 3 | eine Übersichtsanordnung einer Telekommunikationsanordnung gemäß WO 2007/000447 A1, |
| Fig. 4 | eine Übersichtsanordnung einer Telekommunikationsanordnung gemäß dem One Number Service, |
| Fig. 5 | eine Übersichtsanordnung einer erfindungsgemäßen Telekommunikationsanordnung, |
| Fig. 6 | eine Übersichtsanordnung einer Telekommunikationsanordnung gemäß DE 20 2011 003 225 U1, |
| Fig. 7 | eine weitere Darstellung der erfindungsgemäßen Telekommunikationsanordnung, |
| Fig. 8 | Beispiele der Anwendung der vorliegenden Erfindung, |
| Fig. 9 | A und B entsprechende Darstellungen für UC-ONS Applikationen bzw. für CSTA-Applikationen, |
| Fig. 10 und 11 | weitere Beispiele der Anwendung der vorliegenden Erfindung, |
| Fig. 12 | eine entsprechende Darstellung für UC-ONS Applikationen, |
| Fig. 13 | eine Darstellung einer Gruppenbildung mit einer Gruppe oder MULAP pro Nutzer für seine internen Devices, wobei die Auswahl der aktiven Devices innerhalb der Gruppe/MULAP mittels Herein- bzw. Herausschalten der Gruppen- und MULAP-Teilnehmer erfolgt, und |
| Fig. 14 | eine Darstellung einer Gruppenbildung mit einer Gruppe oder MULAP pro Nutzer für seine internen Devices und mehreren virtuellen Devices, welche externe ONDs des Nutzers repräsentieren. |

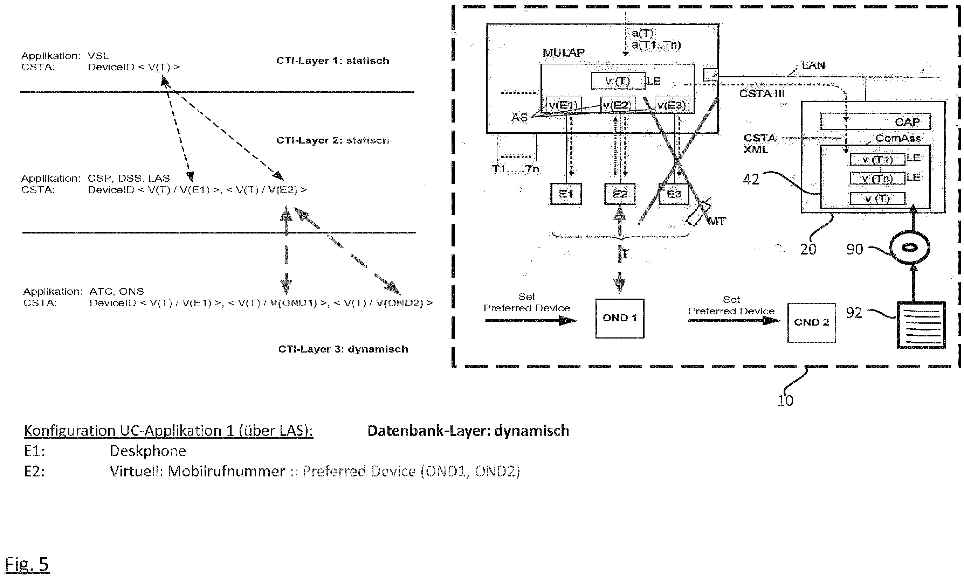

In Fig. 5 ist eine erste Ausführungsform eines Telekommunikationssystems 10 dargestellt, bei dem die vorliegende Erfindung eingesetzt wird, d.h. insbesondere das erfindungsgemäße Verfahren in der nachfolgend beschriebenen Weise ausgeführt wird.

Das Telekommunikationssystem 10 umfasst einem Benutzer T zugeordnete Endgeräte E1, E2, OND 1 und OND 2, sowie ggf. weitere Endgeräte. Außerdem enthält es eine Steuervorrichtung 42 in einem Server, welche das der Erfindung zugrundeliegende Verfahren unter Verwendung eines schematisch dargestellten Computerprogramms 92 (gespeichert auf einer CD-ROM 90 als Beispiel für einen Datenträger) ausführt.

Die vorliegende Erfindung verknüpft den dynamischen Ansatz mit dem statischen Ansatz. Dieser Schritt erlaubt es nun dem Teilnehmer T in vorteilhafter Weise, sein dynamisches Deskphone E1 oder ein beliebiges Preferred Device OND 1, OND 2 auszuwählen und gleichzeitig seine High-Level Applikation ohne weitere Synchronisation - gleichsam rückwirkungsfrei - zu bedienen. Dies ist in dem in Fig. 5 gezeigten CSTA-Modell gemäß der vorliegenden Erfindung dargestellt.

CTI-Layer 3 passt sich an das jeweils gewählte Preferred Device an und zeigt dynamisch die Verknüpfung des Teilnehmers T mit dem jeweiligen Preferred Device E1, OND 1 oder OND 2 auf.

CTI-Layer 2 zeigt die Verknüpfung des statischen (virtuellen) Teilnehmers E2 mit dem jeweils dynamisch verknüpften Preferred Device. E2 ist somit im mathematischen Sinne eine Funktion des Preferred Device.

$$E2 = f(\text{Preferred Device}) - \text{unendliche Liste}$$

CTI-Layer 1 projiziert bzw. verdichtet für High-Level-Applikationen den Zustand des genutzten Endgerätes E1, E2, OND 1 oder OND 2 auf den Zustand des statischen Teilnehmers T. Der Teilnehmer T wird somit im mathematischen Sinne eine Funktion mit endlicher Liste bei gleichzeitigem unendlichen Inhalt (Preferred Device).

$$T = f(E1, E2 = f(\text{Preferred Device})) - \text{endliche Liste "mit unendlichem Inhalt"}$$

Die Anwendung dieses Verfahrens erlaubt somit den gleichzeitigen und rückwirkungsfreien Betrieb von Applikationen auf den CTI-Layern 1 - 3.

Dieses Verfahren ermöglicht eine statische Zuordnung des Teilnehmers T zu dessen genutzten Endgeräten E1 und E2 bei gleichzeitiger dynamischer Zuordnung eines Preferred Device. Diese Vorgehensweise ermöglicht somit eine Änderung zur Laufzeit, ohne sämtliche betroffenen Monitorpunkte aller Applikationen zu aktualisieren.

In anderen Worten sieht die vorliegende Erfindung beispielsweise vor, mittels eines zusätzlichen CTI-Layers einen bislang statischen Ansatz für einen dynamischen Einsatzzweck vorzubereiten.

Darüber hinaus ist die Projektion bzw. Verdichtung der einzelnen zugeordneten Endgeräte auf den Teilnehmer T nicht wie für VSL (klassische High-Level-UC Applikation) gewünscht, stattdessen möchte der LAS (UC-Applikation mit neuem Preferred-Device-Ansatz) direkten Zugriff auf die einzelnen Endgeräte haben.

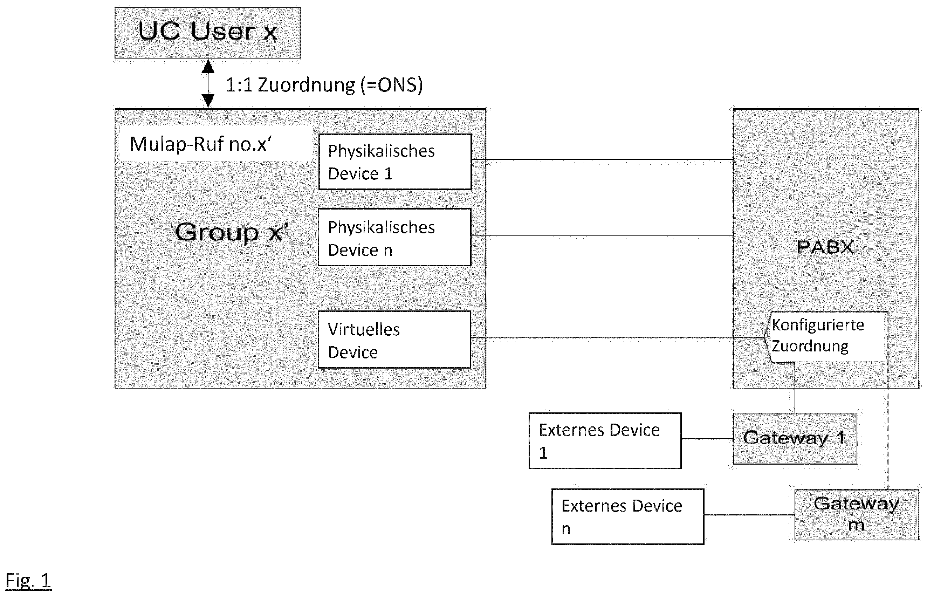

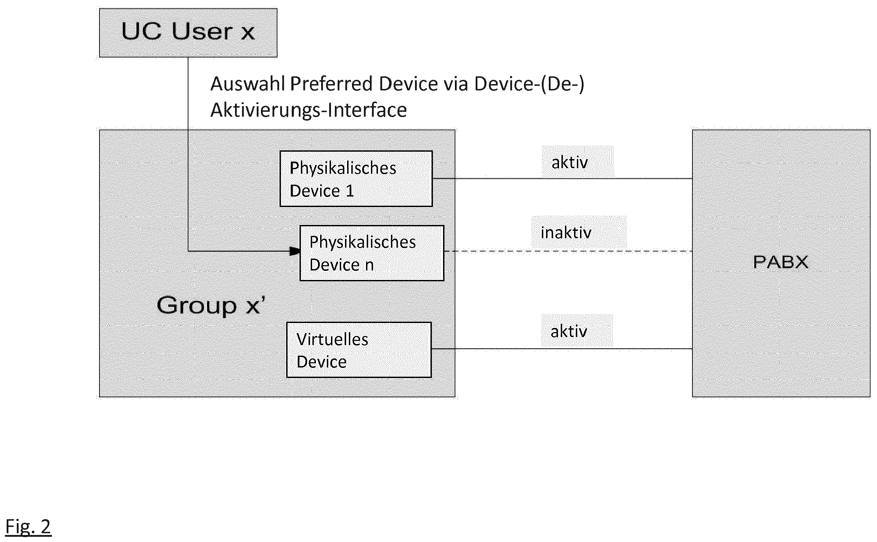

Die folgenden Figuren 1 und 2 sollen dieses Modell verdeutlichen: Fig. 1 stellt die Abbildung eines UC-Users auf eine Gruppe von Devices (Group/MULAP) zwecks Realisierung des One Number Services dar. Die Aktivierung bzw. Deaktivierung einzelner oder mehrerer Devices der Group/MULAP zur dynamischen Festlegung von einem oder mehreren Preferred Devices erfolgt über CSTA durch Adaption des SetAgentState-Kommandos für diese Anwendung. Sind alle Devices der Group/MULAP aktiv geschaltet, so ist dies gleichbedeutend mit "kein Preferred Device - alle Devices der Gruppe aktiv". Fig. 2 zeigt die Realisierung des/der Preferred Device(s) mit erweiterter Flexibilität durch Bildung von Untermengen aktiver Devices.

Die vorliegende Erfindung stellt sich aus CSTA-Sicht betrachtet wie folgt dar:
Die technische Schnittstelle zur Ansteuerung des Kommunikationssystems, insbesondere

- zur Implementierung des vereinfachten One Number Service,
- zur dynamischen Zuordnung externer Rufnummern zu einem virtuellen Device und
- zur dynamischen Aktivierung bzw. Deaktivierung einzelner Devices einer Group/MULAP,

erfolgt vorzugsweise wie bei Kommunikationssystemen üblich über CSTA.

Die Realisierung der CSTA-Anforderungen für den bloßen One Number Service ist äußerst komplex und sowohl für die Kommunikationsserver als auch für die clientseitige Applikationssoftware sehr aufwendig zu implementieren. Dieser Implementierung muss sich im weiteren Verlauf ein aufwendiger Test und ein entsprechend aufwendiger Service anschließen. Zusätzlich ist die Rückwärtskompatibilität zu bereits existierenden Applikationen, insbesondere bereits existierende One Number Services (z.B. bei OSBiz: CallMe und Mobility Entry), sicher zu stellen.

Die vorliegende Erfindung bietet unter Ausnutzung der aus DE 20 2011 003 225 U1 und WO 2014/060008 A1 bekannten Konfiguration eine signifikant vereinfachte Alternative zur sehr komplexen und damit aufwendigen Lösung des bisher bekannten One Number Service.

Die vorliegende Erfindung eignet sich in besonderer Weise für Kommunikationssysteme, die bisher keinen oder eingeschränkten One Number Service bereitstellen, wohl aber das Konzept von Group/MULAP-Gruppen unterstützen.

Als Beispiel wird im Folgenden die OpenScape Business (OSBiz) mit ihren entsprechenden UC-Applikationen verwendet. Es wird gezeigt, wie in vereinfachter Weise ein One Number Service mit erweiterter Flexibilität realisiert sowie der erforderliche Test- und Serviceaufwand deutlich verringert werden kann. Hierzu wird das wechselnde Preferred Device gemäß einem One Number Service für die Applikationen durch den aus DE 20 2011 003 225 U1 und WO 2014/060008 A1 bekannten virtuellen Teilnehmer assoziiert.

Darüber hinaus erlaubt die vorliegende Erfindung eine erweiterte Flexibilität, so dass der Nutzer nicht nur genau eines der Devices aus der Gruppe der ihm zugeordneten Devices, sondern bei Bedarf auch mehrere gleichzeitig als Preferred Devices nutzen kann.

Gemäß DE 20 2011 003 225 U1 wird der externe Teilnehmer innerhalb des Call Processing zunächst durch ein Trunk Device repräsentiert. Zuerst erfolgt eine für die Systemintegration notwendige Authentifizierung, damit nur die berechtigten Mobiltelefone diesen Zugang erhalten. Ist die Authentifizierung abgeschlossen, so werden innerhalb des Call Processings alle weiteren Aktionen des externen Teilnehmers auf ein Teilnehmer-Device umgelenkt (assoziiert). Damit können sämtliche Ausprägungen aller externen Teilnehmer (incl. der Mobilteilnehmer) auf einen internen Teilnehmer abgebildet und entsprechend behandelt werden.

Das verwendete Teilnehmer-Device ist ein sogenanntes virtuelles Device, d.h. ein Device ohne eine physikalische Anbindung und somit ohne zusätzliche Hardware. Die Anbindung an die Physik, d.h. an die unterschiedlichen Hardware Ausprägungen von mobilen Devices bzw. Kommunikationsendgeräten (GSM, WLAN, SIP Endpoint, SIP Provider, Legacy Trunk und Endgeräte, sowie WebRTC - vgl. WO 2014/060008 A1) erfolgt mit der Assoziierung. Die damit verbundene Signalisierung von Leistungsmerkmalen und Tönen in Richtung Trunk wird vom Call Processing über den assoziierten virtuellen Teilnehmer zu dem mobilen Device geleitet. Da der mobile Teilnehmer nicht über ein festes Trunk Device in das System gelangt, ist diese Assoziierung mit dem virtuellen Device immer nur auf die aktuelle Verbindung bezogen und muss jedes Mal neu erstellt werden.

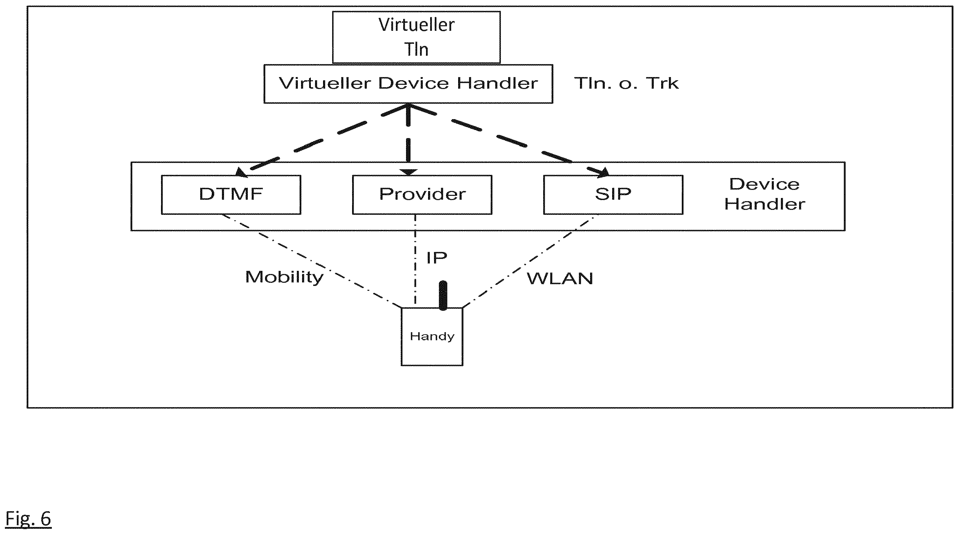

Das Preferred Device wird bei Unify durch den in der Kommunikationsplattform Open Scape Voice (OSV) verwendeten One Number Service (ONS) durch die UC-Applikation mittels CSTA typischerweise in der in Fig. 6 gezeigten Weise abgebildet.

Das Preferred Device wird somit erfindungsgemäß auf das virtuelle Device umgelenkt. Somit werden innerhalb des Call Processings alle weiteren Aktionen des Preferred Device immer mit demselben virtuellen Device assoziiert. Durch die erfindungsgemäße (und daher mit weiteren Merkmalen angereicherte) Nutzung des CSTA Service Call Forwarding (Schritt (a) genannt) setzt nun der User das jeweilige Preferred Device temporär und verknüpft es mit dem virtuellen Device. Interessierte Applikationen synchronisieren sich mittels CSTA Service Call Forwarding auf das jeweils aktuelle Preferred Device. Allen anderen Applikationen bleibt das jeweilige Preferred Device verborgen. Die Rückwärtskompatibilität ist gegeben.

Darüber hinaus werden nicht nur externe mobile Teilnehmer, sondern auch interne Teilnehmer eingebunden.

Es ist ein erweiterter Ansatz durch Gruppenbildung möglich, wie in den Fig. 13 und 14 dargestellt ist.

- Bildung einer Gruppe oder MULAP pro Nutzer für seine internen Devices und eines oder mehrerer virtueller Devices, welche externe ONDs des Nutzers repräsentieren.
- Es kann eine Untermenge von Devices aus der Gruppe/MULAP ausgewählt werden, die für kommende Rufe bevorzugt bzw. preferred (= aktiv) sind.
- Die Auswahl der aktiven (preferred) Devices innerhalb der Gruppe/MULAP erfolgt mittels Herein- bzw. Herausschalten der Gruppen- und MULAP-Teilnehmer durch proprietäre Nutzung des CSTA Service Set Agent State (Schritt (b) genannt).

Damit erlauben die Schritte (a) und (b) eine vereinfachte individuelle Einrichtung des Preferred Device bei gleichzeitiger individueller Auswahl der zu rufenden Ziele.

Vorteile dieses erweiterten Ansatzes sind:

- Erweiterte Flexibilität: Es kann nicht nur genau ein Preferred Device festgelegt werden, sondern auch mehrere.
- Sonderfall "kein Preferred Device" ist einfach abbildbar, indem alle Devices auf logged on bzw. available gesetzt werden.
- Für gehende Anrufe kann unabhängig von der Anzahl der aktiven Devices genau ein "handelndes Device" festgelegt werden, und zwar individuell pro Applikationsinstanz.
- Gruppenspezifische Leistungsmerkmale des OpenScape-Systems können genutzt werden, z.B. Rufweiterschaltungsregeln innerhalb der Gruppe (ähnlich einer AutoPilot-Funktion z.B. bei OpenScape UC/Circuit).

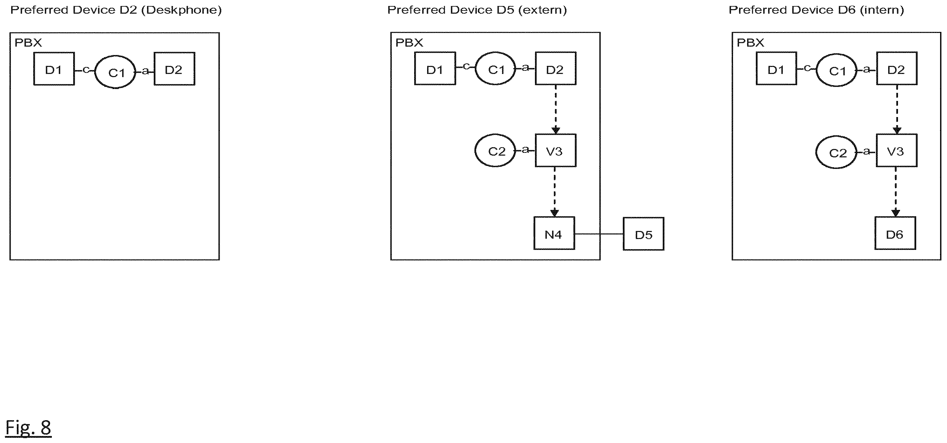

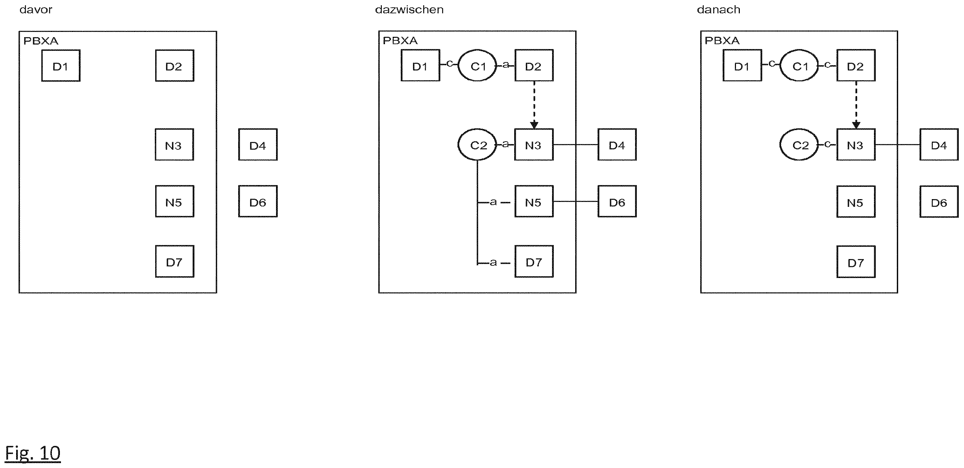

Verschiedene Beispiele der Anwendung der vorliegenden Erfindung sind in den Fig. 8 bis 12 gezeigt. Dabei besitzen die in den Fig. 8 und 10 in den Verbindungen angegebenen Kleinbuchstaben die folgende Bedeutung:

c: vermittlungstechnisch "verbunden" (connected),
a: vermittlungstechnisch "klingelnd" (alerting).

Die in Kreisen enthaltenen Angaben "C1" und "C2" bedeuten "Ruf1" (Call1) bzw. "Ruf2" (Call2). Die mit einem Buchstaben "V" bezeichneten Devices sind virtuelle Devices, und die mit einem Buchstaben "N" bezeichneten Devices sind Netzwerk-Devices.

Die Auswahl der verwendeten CSTA-Services und -Parameter ist exemplarisch. Der gleiche Effekt kann auch unter Verwendung anderer CSTA-Parameter erzielt werden.

Fig. 8 zeigt das Setzen des Preferred Device (entspricht Schritt a). Ein User 2 verändert sein Preferred Device zum Deskphone D2, zu einem externen Device D5 (z.B. GSM) bzw. zu einem internen Device D6 (z.B. Besprechungsraum). User 1 ruft User 2.

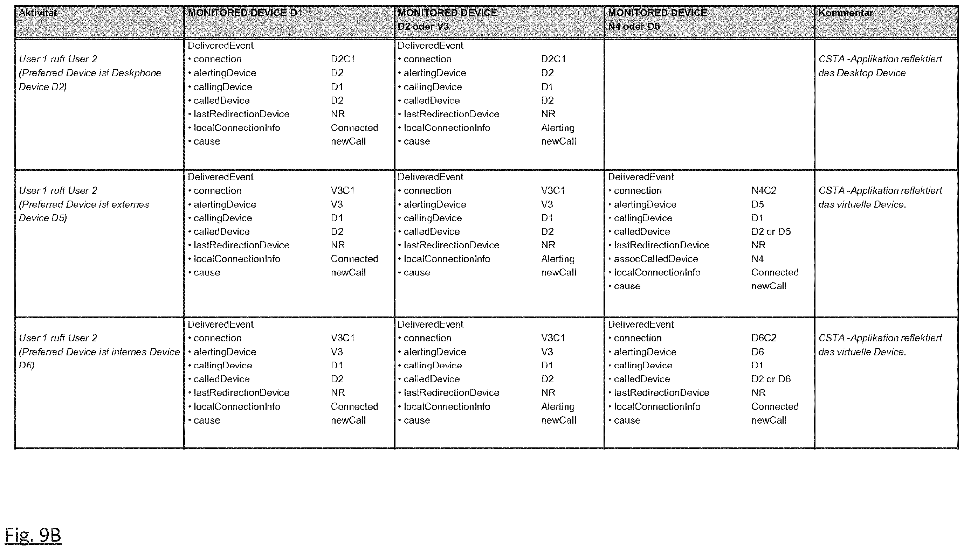

Fig. 9A zeigt eine entsprechende Darstellung für UC-ONS Applikationen, während Fig. 9B eine entsprechende Darstellung für CSTA-Applikationen zeigt, wobei die in den jeweils mit "MONITORED DEVICE" überschriebenen Spalten enthaltenen fachsprachlichen Kommandos im englischen Originaltext belassen und nicht übersetzt wurden, da sie sonst unverständlich würden. Die Darstellung für CSTA-Applikationen ist dann vorzugsweise über das Deskphone Device D2 oder das Virtuelle Device V3.

Fig. 10 zeigt die Auswahl des Preferred Device (entspricht Schritt b). User 1 ruft User 2. Ein User 2 hat eine Gruppe oder MULAP mit entsprechenden Preferred Devices. Die Signalisierung erfolgt in der in Fig. 10 dargestellten Weise, wobei links der Zustand vor dem Ruf, in der Mitte der Zustand während des Rufaufbaus und rechts der Zustand nach erfolgtem Rufaufbau dargestellt ist.

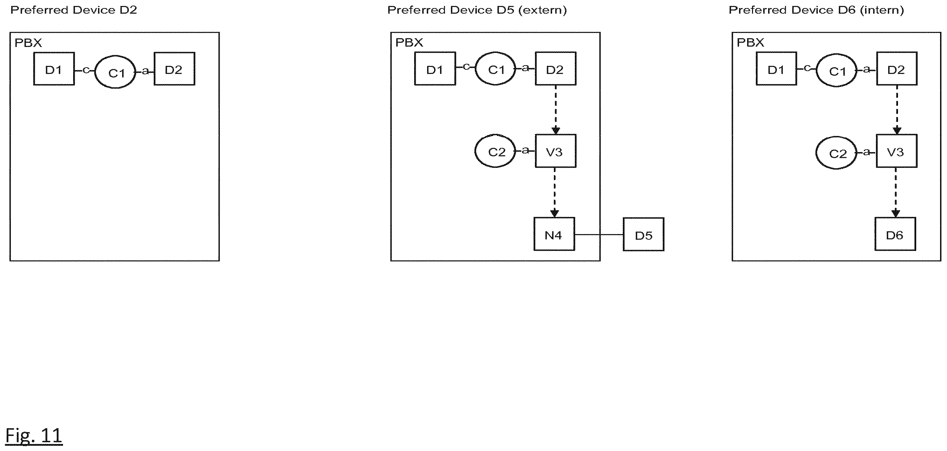

Wird die Auswahl des Preferred Device vom Deskphone D2 zu einem externen Device D5 (z.B. GSM) und zu einem internen Device D6 (z.B. Besprechungsraum) verändert, vereinfacht sich die Signalisierung in der in Fig. 11 dargestellten Weise. User 1 ruft wieder User 2.

Fig. 12 zeigt eine entsprechende Darstellung für UC-ONS Applikationen, wobei wiederum die in den jeweils mit "MONITORED DEVICE" überschriebenen Spalten enthaltenen fachsprachlichen Kommandos im englischen Originaltext belassen und nicht übersetzt wurden, da sie sonst unverständlich würden. Hierbei ist das exklusive Hereinschalten oder Herausschalten gleich bedeutend. Die Darstellung für CSTA-Applikationen ist wie in Fig. 9B

Es ist festzuhalten, dass die gleichen Verknüpfungs- bzw. Zuordnungsmechanismen für MULAP, nur GSM und die Dual-Mode-Mobility-Konfiguration gelten.

Es versteht sich, dass bei der vorliegenden Erfindung ein Zusammenhang zwischen einerseits Merkmalen besteht, die im Zusammenhang mit Verfahrensschritten beschrieben wurden, sowie andererseits Merkmalen, die im Zusammenhang mit entsprechenden Vorrichtungen beschrieben wurden. Somit sind beschriebene Verfahrensmerkmale auch als zur Erfindung gehörige Vorrichtungsmerkmale - und umgekehrt - anzusehen, selbst wenn dies nicht explizit erwähnt wurde.

Es ist festzuhalten, dass die unter Bezug auf die dargestellten Ausführungsformen beschriebenen Merkmale der Erfindung, wie beispielsweise die Art und Ausgestaltung der einzelnen Komponenten und Endgeräte des Kommunikationssystems, einzelner Nachrichten, Signale und Parameter, auch bei anderen Ausführungsformen vorhanden sein können, außer wenn es anders angegeben ist oder sich aus technischen Gründen von selbst verbietet.

Bezugszeichenliste

> 10 = Telekommunikationssystem
> 20 = Server
> 42 = Steuereinrichtung
> 90 = maschinenlesbarer Datenträger
> 92 = Computerprogramm

**Patentansprüche**

1. Computerimplementiertes Verfahren zum Integrieren mindestens eines einem Benutzer (T) zugeordneten ersten Kommunikationsendgeräts E1 (E1) als bevorzugtes Gerät (OND 1) in eine statische Konfiguration eines Telekommunikationssystems (50) und/oder zum dynamischen Zuordnen von einem als bevorzugtes Gerät (OND 1) genutzten ersten Kommunikationsendgerät E1 (E1) oder einem als bevorzugtes Gerät (OND 2) genutzten zweiten Kommunikationsendgerät E2 (E2) zum Bereitstellen eines One Number Service unter Verwendung des bevorzugten Geräts (OND 1, OND 2), welchem eine One-Number-Service-Nummer zugeordnet ist, wobei dem Benutzer (T) mindestens zwei Kommunikationsendgeräte E1 und E2 (E1, E2) statisch zugeordnet werden;

   > wobei die dem Benutzer (T) zugeordneten Geräte in einer Gruppe (MULAP) gebündelt sind; wobei eine Rufnummer der Gruppe (MULAP) als Rufnummer des One-Number-Services dient;
   > wobei ein dritter Computer Telephony Intergration Layer, CTI-Layer (CTI-Layer 3) sich an das jeweils gewählte bevorzugte Gerät ( OND1, OND2) anpasst und dynamisch die Verknüpfung des Benutzers (T) mit dem jeweils gewählten bevorzugten Gerät (OND1, OND2) aufzeigt;
   > wobei ein zweiter CTI-Layer (CTI-Layer 2) ein statisches virtuelles Gerät E2 (E2) mit dem jeweiligen dynamisch verknüpften bevorzugten Gerät (OND 1, OND 2) verknüpft;
   > wobei der zweite CTI-Layer (CTI-Layer 2) zwischen einem ersten CTI-Layer (CTI-Layer 1) und dem dritten CTI-Layer (CTI-Layer 3) angeordnet ist;
   > wobei der erste CTI-Layer einen Zustand des bevorzugt genutzten Endgeräts E1 oder E2 (V(E1), V(E2)) für High-Level-Applikationen auf einen Zustand des Benutzers (V(T)) kondensiert.

2. Verfahren nach Anspruch 1,
   **dadurch gekennzeichnet, dass** jedes einzelne Gerät der Gruppe (MULAP) über eine geeignete Schnittstelle aktiv bzw. inaktiv geschaltet werden kann und dadurch eine Untermenge von mehreren Geräten gebildet werden kann, die zu einem bestimmten Zeitpunkt als bevorzugtes Gerät aktiv sind.

3. Verfahren nach Anspruch 1 oder 2,
   **dadurch gekennzeichnet, dass** das Integrieren des bevorzugten Geräts (OND 1) und/oder die dynamische Zuordnung des bevorzugten Gerätes (OND 1, OND 2) ohne weitere Synchronisation auf die gesamte Anwendungsumgebung erfolgt.

4. Verfahren nach einem der vorhergehenden Ansprüche,
**dadurch gekennzeichnet, dass** das Integrieren des bevorzugten Geräts (OND 1) und/oder die dynamische Zuordnung des bevorzugten Gerätes (OND 1, OND 2) mittels Set- und Get-Funktionen, insbesondere mittels Set/Get-Forwarding, einer Applikations-Software erfolgt.

5. Verfahren nach einem der Ansprüche 1 bis 3,
**dadurch gekennzeichnet, dass** bevorzugte Geräte (OND 1, OND 2), mittels Set- und Get-Funktionen, insbesondere mittels Set/GetAgentState, einer Applikations-Software aktiviert und deaktiviert werden und dadurch beliebige Untermengen der bereits zugeordneten statischen Konfiguration gebildet werden.

6. Verfahren nach Anspruch 5,
**dadurch gekennzeichnet, dass** das Aktivieren bzw. Deaktivieren eines bevorzugten Geräts (OND 1, OND 2), ein automatisches Deaktivieren bzw. Aktivieren anderer zugeordneter Geräte bedingt.

7. Verfahren nach Anspruch 4 oder 5,
**dadurch gekennzeichnet, dass** die dynamische Verknüpfung und ein/das Aktivieren bzw. Deaktivieren eines bevorzugten Geräts (OND 1, OND 2) auf dem dritten CTI-Layer (CTI-Layer 3) erfolgt, wobei der dritte CTI-Layer (CTI-Layer 3) als eine eigene, vorzugsweise in sich geschlossenen, Darstellungsebene ausgebildet ist, die insbesondere einem virtuellen Gerät entspricht.

8. Computerprogrammprodukt (92) zur Durchführung des Verfahrens gemäß einem der vorhergehenden Ansprüche.

9. Maschinenlesbarer Datenträger (90) mit darauf gespeichertem Computerprogrammprodukt (92) gemäß Anspruch 8.

10. Kommunikationssystem (10) zum Integrieren mindestens eines einem Benutzer (T) zugeordneten ersten Kommunikationsendgeräts E1 (E1) als bevorzugtes Gerät (OND 1) in eine statische Konfiguration des Kommunikationssystems (10) und/oder zum dynamischen Wechsel von einem als bevorzugtes Gerät (OND 1) genutzten ersten Kommunikaionsendgerät E1 (E1) zu einem zweiten Kommunikationsendgerät E2 (E2) als bevorzugtes Gerät (OND 2) zum Bereitstellen eines One Number Service unter Verwendung des bevorzugten Geräts (OND 1, OND 2), welchem eine One-Number-Service-Nummer zugeordnet ist, umfassend

- mindestens zwei Kommunikationsendgeräte (E1, E2, OND 1, OND 2) und
- eine Steuereinrichtung (42) zum Ausführen des Verfahrens gemäß einem der Ansprüche 1 bis 7.

**Claims**

1. Computer-implemented method for integrating at least a first communication terminal E1 (E1) assigned to a user (T) as a preferred device (OND 1) into a static configuration of a telecommunication system (50) and/or for dynamically assigning a first communication terminal E1 (E1) used as a preferred device (OND 1) or a second communication terminal E2 (E2) used as a preferred device (OND 2) for providing a one-number service using the preferred device (OND 1, OND 2) to which a one-number service number is assigned, wherein at least two communication terminals E1 and E2 (E1, E2) are statically assigned to the user (T);

wherein the devices assigned to the user (T) are bundled in a group (MULAP);
wherein a call number of the group (MULAP) serves as the call number of the one-number service;
wherein a third Computer Telephony Integration Layer, CTI Layer (CTI Layer 3) adapts to the respectively selected preferred device (OND1, OND2) and dynamically displays the link of the user (T) with the respectively selected preferred device (OND1, OND2);
wherein a second CTI layer (CTI layer 2) links a static virtual device E2 (E2) with the respective dynamically linked preferred device (OND 1, OND 2);
wherein the second CTI layer (CTI layer 2) is arranged between a first CTI layer (CTI layer 1) and the third CTI layer (CTI layer 3);
wherein the first CTI layer condenses a state of the preferably used terminal device E1 or E2 (V(E1), V(E2)) for high-level applications to a state of the user (V(T)).

**2.** Method according to claim 1,
**characterized in that** each individual device of the group (MULAP) can be switched active or inactive via a suitable interface and a subset of several devices can thereby be formed which are active as a preferred device at a specific time.

**3.** Method according to claim 1 or 2,
**characterized in that** the integration of the preferred device (OND 1) and/or the dynamic assignment of the preferred device (OND 1, OND 2) takes place without further synchronization to the entire application environment.

**4.** Method according to any one of the preceding claims,
**characterized in that** the integration of the preferred device (OND 1) and/or the dynamic assignment of the preferred device (OND 1, OND 2) is carried out by means of Set and Get functions, in particular by means of Set/GetForwarding, an application software.

**5.** Method according to any one of claims 1 to 3,
**characterized in that** preferred devices (OND 1, OND 2) are activated and deactivated by means of Set and Get functions, in particular by means of Set/GetAgentState, an application software, thereby forming any desired subsets of the already assigned static configuration.

**6.** Method according to claim 5,
**characterized in that** the activation or deactivation of a preferred device (OND 1, OND 2) causes an automatic deactivation or activation of other associated devices.

**7.** Method according to claim 4 or 5,
**characterized in that** the dynamic linking and activation/deactivation of a preferred device (OND 1, OND 2) takes place on the third CTI layer (CTI layer 3), the third CTI layer (CTI layer 3) being designed as a separate, preferably self-contained, display layer which corresponds in particular to a virtual device.

**8.** Computer program product (92) for carrying out the method according to any one of the preceding claims.

**9.** Machine-readable data carrier (90) with computer program product (92) stored thereon according to claim 8.

**10.** Communication system (10) for integrating at least a first communication terminal E1 (E1) assigned to a user (T) as a preferred device (OND 1) into a static configuration of the communication system (10) and/or for dynamically switching from a first communication terminal E1 (E1) used as a preferred device (OND 1) to a second communication terminal E2 (E2) used as a preferred device (OND 2) for providing a one-number service using the preferred device (OND 1, OND 2) to which a one-number service number is assigned, comprising

- at least two communication terminals (E1, E2, OND 1, OND 2) and
- a control device (42) for carrying out the method according to any one of claims 1 to 7.

**Revendications**

**1.** Procédé informatisé pour intégrer au moins un premier terminal de communication E1 (E1) associé à un utilisateur (T) en tant que dispositif favori (OND 1) dans une configuration statique d'un système de télécommunications (50) et/ou pour associer dynamiquement un premier terminal de communication E1 (E1) utilisé en tant que dispositif favori (OND 1) ou un deuxième terminal de communication E2 (E2) utilisé en tant que dispositif favori (OND 2) pour fournir un service à numéro unique en utilisant le dispositif favori (OND 1, OND 2) auquel un numéro de service à numéro unique est attribué, au moins deux terminaux de communication E1 et E2 (E1, E2) étant attribués de manière statique à l'utilisateur (T);

dans lequel les dispositifs associés à l'utilisateur (T) sont regroupés dans un groupe (MULAP);
dans lequel un numéro d'appel du groupe (MULAP) sert de numéro d'appel du service à numéro unique;
dans lequel une troisième couche d'intégration de téléphonie informatique, couche CTI (couche CTI 3) s'adapte à l'appareil favori (OND1, OND2) respectivement sélectionné et affiche de manière dynamique l'association de l'utilisateur (T) avec l'appareil favori (OND1, OND2) respectivement sélectionné;
dans lequel une deuxième couche CTI (couche CTI 2) associe un dispositif virtuel statique E2 (E2) au dispositif favori dynamiquement associé respectif (OND 1, OND 2);

dans lequel la deuxième couche CTI (couche CTI 2) est disposée entre une première couche CTI (couche CTI 1) et la troisième couche CTI (couche CTI 3);

dans lequel la première couche CTI condense un état du terminal E1 ou E2 utilisé de préférence (V(E1), V(E2)) pour des applications de haut niveau en un état de l'utilisateur (V(T)).

2. Procédé selon la revendication 1,
**caractérisé en ce que** chaque appareil individuel du groupe (MULAP) peut être rendu actif ou inactif par l'intermédiaire d'une interface appropriée et qu'il est ainsi possible de former un sous-ensemble de plusieurs appareils qui sont actifs en tant qu'appareil favori à un moment spécifique.

3. Procédé selon la revendication 1 ou 2,
**caractérisé en ce que** l'intégration du dispositif favori (OND 1) et/ou l'attribution dynamique du dispositif favori (OND 1, OND 2) se fait sans autre synchronisation sur l'ensemble de l'environnement d'application.

4. Procédé selon l'une des revendications précédentes,
**caractérisé en ce que** l'intégration de l'appareil favori (OND 1) et/ou l'attribution dynamique de l'appareil favori (OND 1, OND 2) s'effectue au moyen de fonctions Set et Get, en particulier au moyen de Set/GetForwarding, un logiciel d'application.

5. Procédé selon l'une des revendications 1 à 3,
**caractérisé en ce que** des appareils favoris (OND 1, OND 2) sont activés et désactivés au moyen de fonctions Set et Get, en particulier au moyen de Set/GetAgentState, un logiciel d'application, et que des sous-ensembles de la configuration statique déjà attribuée sont ainsi formés au choix.

6. Procédé selon la revendication 5,
**caractérisé en ce que** l'activation ou la désactivation d'un dispositif favori (OND 1, OND 2) conditionne la désactivation ou l'activation automatique d'autres dispositifs associés.

7. Procédé selon la revendication 4 ou 5,
**caractérisé en ce que** la liaison dynamique et une ou l'activation ou désactivation d'un appareil favori (OND 1, OND 2) s'effectue sur la troisième couche CTI (couche CTI 3), la troisième couche CTI (couche CTI 3) étant conçue comme un plan de représentation distinct, de préférence fermé sur lui-même, qui correspond plus particulièrement à un appareil virtuel.

8. Produit programme d'ordinateur (92) pour la réalisation du procédé selon l'une des revendications précédentes.

9. Support de données lisible par machine (90) sur lequel est stocké un produit programme d'ordinateur (92) selon la revendication 8.

10. Système de communication (10) pour intégrer au moins un premier terminal de communication E1 (E1) associé à un utilisateur (T) en tant que dispositif favori (OND 1) dans une configuration statique du système de communication (10) et/ou pour passer de manière dynamique d'un premier terminal de communication E1 (E1) utilisé en tant que dispositif favori (OND 1) à un deuxième terminal de communication E2 (E2) en tant que dispositif favori (OND 2), afin de fournir un service à numéro unique en utilisant le dispositif favori (OND 1, OND 2) auquel un numéro de service à numéro unique est attribué, comprenant

- au moins deux terminaux de communication (E1, E2, OND 1, OND 2) et
- un dispositif de commande (42) pour la réalisation du procédé selon l'une des revendications 1 à 7.

PABX

Konfigurierte Zuordnung

Gateway 1

Gateway m

Externes Device 1

Externes Device n

UC User x

1:1 Zuordnung (=ONS)

Mulap-Ruf no.x'

Group x'

Physikalisches Device 1

Physikalisches Device n

Virtuelles Device

Fig. 1

13

UC User x

Auswahl Preferred Device via Device-(De-)
Aktivierungs-Interface

Group x'

Physikalisches
Device 1

Physikalisches
Device n

Virtuelles
Device

aktiv

inaktiv

aktiv

PABX

Fig. 2

**CTI-Layer 1: statisch**

Applikation: VSL
CSTA: DeviceID < V(T) >

**CTI-Layer 2: statisch**

Applikation: CSP, DSS, LAS
CSTA: DeviceID < V(T) / V(E1) >, < V(T) / V(E2) >, < V(T) / V(E3) >

**Datenbank-Layer: statisch**

Konfiguration UC-Applikation 1 (über LAS):

E1: Deskphone
E2: Virtuell: Mobilrufnummer
E3: Mobilteil (CMI)

Fig. 3

**CTI-Layer: dynamisch**

Applikation: ATC, ONS (UC)
CSTA: DeviceID < V(T) / V(E1) >, < V(T) / V(E2) >, < V(T) / V(OND1) >

**Datenbank-Layer: dynamisch**

Konfiguration ATC:

E1: Deskphone
E2: Circuit Client (SIP Mode)
OND 1: Preferred Device (GSM)
OND 2: Preferred Device (Home Office)

_Fig. 4_

Fig. 5

Konfiguration UC-Applikation 1 (über LAS):     Datenbank-Layer: dynamisch

E1:     Deskphone
E2:     Virtuell: Mobilrufnummer :: Preferred Device (OND1, OND2)

CTI-Layer 1: statisch

Applikation:  VSL
CSTA:         DeviceID < V(T) >

CTI-Layer 2: statisch

Applikation:  CSP, DSS, LAS
CSTA:         DeviceID < V(T) / V(E1) >, < V(T) / V(E2) >

CTI-Layer 3: dynamisch

Applikation:  ATC, ONS
CSTA:         DeviceID < V(T) / V(E1) >, < V(T) / V(OND1) >, < V(T) / V(OND2) >

CAP
ComAss
LE   v (T1)
LE   v (Tn)
     v (T)
LAN
CSTA III
CSTA XML
42
20
90
92
10

MULAP
a(T)
a(T1...Tn)
LE   v (T)
v(E1)
v(E2)
v(E3)
AS
E1   E2   E3
T1.....Tn
MT
T
OND 1
OND 2
Set Preferred Device
Set Preferred Device

Fig. 6

Externe ONDs

Externe Bindung

ONS-Teilnehmer-Identitäten

Interne Bindung

Intern registrierte ONDs

PSTN

GSM

Virtuelles Device

Verknüpfung

OpenScape Plattform

CSTA + ONS

ONS-UC-Applikation

CSTA

Andere Applikation

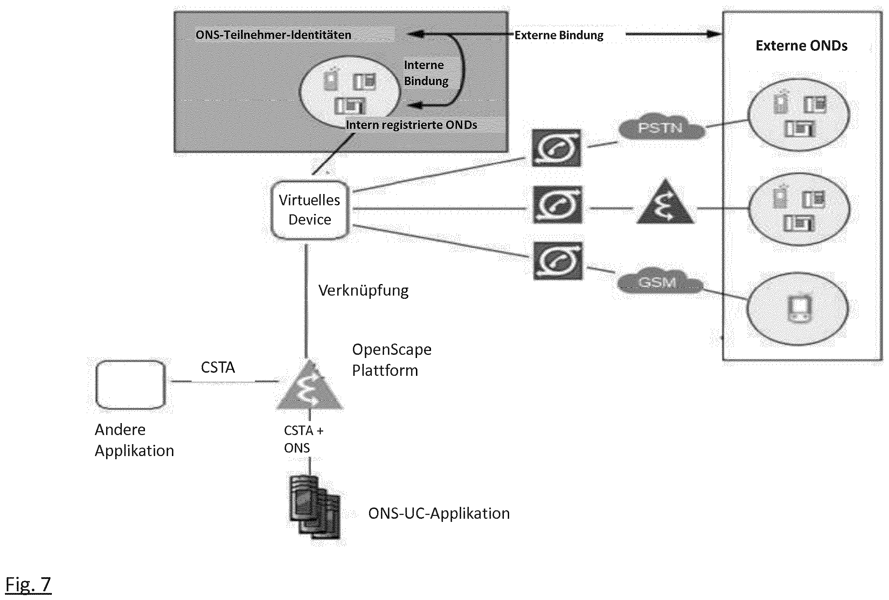

Fig. 7

Fig. 8

| Aktivität | MONITORED DEVICE D1 | | MONITORED DEVICE D2 | | Kommentar |
|---|---|---|---|---|---|
| User 2 aktiviert Deskphone Device D2 als Preferred Device | | | SetForwardingRequest<br>• device<br>• forwardingType<br>• activateForwarding<br>• forwardDN | D2<br>forwardImmediate<br>True<br>N<D2>PreferredDevice | *forwardingType forwardImmediate ist hier beispielhaft in Anlehnung an die existierenden ECMA Definitionen, anders lautende Definitionen wie preferredDevice sind frei wählbar* |
| User 1 ruft User 2 | DeliveredEvent<br>• connection<br>• alertingDevice<br>• callingDevice<br>• calledDevice<br>• lastRedirectionDevice<br>• localConnectionInfo<br>• cause | D2C1<br>D2\|D2<br>D1<br>D2<br>NR<br>Connected<br>newCall | DeliveredEvent<br>• connection<br>• alertingDevice<br>• callingDevice<br>• calledDevice<br>• lastRedirectionDevice<br>• localConnectionInfo<br>• cause | D2C1<br>D2\|D2<br>D1<br>D2<br>NR<br>Alerting<br>newCall | *UC-ONS Applikation reflektiert die dynamische Bindung der Verbindung C1.* |
| User 2 aktiviert externes Device D5 als Preferred Device | | | SetForwardingRequest<br>• device<br>• forwardingType<br>• activateForwarding<br>• forwardDN | D2<br>forwardImmediate<br>True<br>N<D5>PreferredDevice | *forwardingType forwardImmediate ist hier beispielhaft in Anlehnung an die existierenden ECMA Definitionen, anders lautende Definitionen wie preferredDevice sind frei wählbar* |
| User 1 ruft User 2 | DeliveredEvent<br>• connection<br>• alertingDevice<br>• callingDevice<br>• calledDevice<br>• lastRedirectionDevice<br>• localConnectionInfo<br>• cause | D2C1<br>D2\|D5<br>D1<br>D2<br>NR<br>Connected<br>newCall | DeliveredEvent<br>• connection<br>• alertingDevice<br>• callingDevice<br>• calledDevice<br>• lastRedirectionDevice<br>• localConnectionInfo<br>• cause | D2C1<br>D2\|D5<br>D1<br>D2<br>NR<br>Alerting<br>newCall | *UC-ONS Applikation reflektiert die dynamische Bindung der Verbindung C1.* |
| User 2 aktiviert internesDevice D6 als Preferred Device | | | SetForwardingRequest<br>• device<br>• forwardingType<br>• activateForwarding<br>• forwardDN | D2<br>forwardImmediate<br>True<br>N<D6>PreferredDevice | *forwardingType forwardImmediate ist hier beispielhaft in Anlehnung an die existierenden ECMA Definitionen, anders lautende Definitionen wie preferredDevice sind frei wählbar* |
| User 1 ruft User 2 | DeliveredEvent<br>• connection<br>• alertingDevice<br>• callingDevice<br>• calledDevice<br>• lastRedirectionDevice<br>• localConnectionInfo<br>• cause | D2C1<br>D2\|D6<br>D1<br>D2<br>NR<br>Connected<br>newCall | DeliveredEvent<br>• connection<br>• alertingDevice<br>• callingDevice<br>• calledDevice<br>• lastRedirectionDevice<br>• localConnectionInfo<br>• cause | D2C1<br>D2\|D6<br>D1<br>D2<br>NR<br>Alerting<br>newCall | *UC-ONS Applikation reflektiert die dynamische Bindung der Verbindung C1.* |

## Fig. 9A

| Aktivität | MONITORED DEVICE D1 | | MONITORED DEVICE D2 oder V3 | | MONITORED DEVICE N4 oder D6 | | Kommentar |
|---|---|---|---|---|---|---|---|
| User 1 ruft User 2 (Preferred Device ist Deskphone Device D2) | DeliveredEvent<br>• connection<br>• alertingDevice<br>• callingDevice<br>• calledDevice<br>• lastRedirectionDevice<br>• localConnectionInfo<br>• cause | D2C1<br>D2<br>D1<br>D2<br>NR<br>Connected<br>newCall | DeliveredEvent<br>• connection<br>• alertingDevice<br>• callingDevice<br>• calledDevice<br>• lastRedirectionDevice<br>• localConnectionInfo<br>• cause | D2C1<br>D2<br>D1<br>D2<br>NR<br>Alerting<br>newCall | | | *CSTA -Applikation reflektiert das Desktop Device* |
| User 1 ruft User 2 (Preferred Device ist externes Device D5) | DeliveredEvent<br>• connection<br>• alertingDevice<br>• callingDevice<br>• calledDevice<br>• lastRedirectionDevice<br>• localConnectionInfo<br>• cause | V3C1<br>V3<br>D1<br>D2<br>NR<br>Connected<br>newCall | DeliveredEvent<br>• connection<br>• alertingDevice<br>• callingDevice<br>• calledDevice<br>• lastRedirectionDevice<br>• localConnectionInfo<br>• cause | V3C1<br>V3<br>D1<br>D2<br>NR<br>Alerting<br>newCall | DeliveredEvent<br>• connection<br>• alertingDevice<br>• callingDevice<br>• calledDevice<br>• lastRedirectionDevice<br>• assocCalledDevice<br>• localConnectionInfo<br>• cause | N4C2<br>D5<br>D1<br>D2 or D5<br>NR<br>N4<br>Connected<br>newCall | *CSTA -Applikation reflektiert das virtuelle Device.* |
| User 1 ruft User 2 (Preferred Device ist internes Device D6) | DeliveredEvent<br>• connection<br>• alertingDevice<br>• callingDevice<br>• calledDevice<br>• lastRedirectionDevice<br>• localConnectionInfo<br>• cause | V3C1<br>V3<br>D1<br>D2<br>NR<br>Connected<br>newCall | DeliveredEvent<br>• connection<br>• alertingDevice<br>• callingDevice<br>• calledDevice<br>• lastRedirectionDevice<br>• localConnectionInfo<br>• cause | V3C1<br>V3<br>D1<br>D2<br>NR<br>Alerting<br>newCall | DeliveredEvent<br>• connection<br>• alertingDevice<br>• callingDevice<br>• calledDevice<br>• lastRedirectionDevice<br>• localConnectionInfo<br>• cause | D6C2<br>D6<br>D1<br>D2 or D6<br>NR<br>Connected<br>newCall | *CSTA -Applikation reflektiert das virtuelle Device.* |

Fig. 9B

Fig. 10

Preferred Device D2

PBX

D1 —c— C1 —a— D2

Preferred Device D5 (extern)

PBX

D1 —c— C1 —a— D2

C2 —a— V3

N4 —— D5

Preferred Device D6 (intern)

PBX

D1 —c— C1 —a— D2

C2 —a— V3

D6

Fig. 11

EP 3 253 037 B1

EP 3 253 037 B1

| Aktivität | MONITORED DEVICE D1 | MONITORED DEVICE D2 | Kommentar |
|---|---|---|---|
| User 2 aktiviert Deskphone D2 als Preferred Device | | SetAgentState<br>• device D2<br>• requestedAgentState loggedOn/loggedOff<br>• group D2 | requestedAgentState ist hier beispielhaft in Anlehnung an die existierenden ECMA Definitionen wie loggedOn/loggedOff/ready/notReady, anders lautende Definitionen sind frei wählbar. |
| User D1 ruft User 2 | DeliveredEvent<br>• connection D2C1<br>• alertingDevice D2\|D2<br>• callingDevice D1<br>• calledDevice D2<br>• lastRedirectionDevice NR<br>• localConnectionInfo Connected<br>• cause newCall | DeliveredEvent<br>• connection D2C1<br>• alertingDevice D2\|D2<br>• callingDevice D1<br>• calledDevice D2<br>• lastRedirectionDevice NR<br>• localConnectionInfo Alerting<br>• cause newCall | UC-ONS-Applikation reflektiert die dynamische Bindung der Verbindung C1. Die Ereignisse (Events) können auf auf das virtuelle Device V3 referenziert werden. |
| User 2 aktiviert externes Device D5 als Preferred Device | | SetAgentState<br>• device D5<br>• requestedAgentState loggedOn/loggedOff<br>• group D2 | requestedAgentState ist hier beispielhaft in Anlehnung an die existierenden ECMA Definitionen wie loggedOn/loggedOff/ready/notReady, anders lautende Definitionen sind frei wählbar. |
| User 1 ruft User 2 | DeliveredEvent<br>• connection D2C1<br>• alertingDevice D2\|D5<br>• callingDevice D1<br>• calledDevice D2<br>• lastRedirectionDevice NR<br>• localConnectionInfo Connected<br>• cause newCall | DeliveredEvent<br>• connection D2C1<br>• alertingDevice D2\|D5<br>• callingDevice D1<br>• calledDevice D2<br>• lastRedirectionDevice NR<br>• localConnectionInfo Alerting<br>• cause newCall | UC-ONS-Applikation reflektiert die dynamische Bindung der Verbindung C1. Die Ereignisse (Events) können auf auf das virtuelle Device V3 referenziert werden. |
| User 2 aktiviert internes Device D6 als Preferred Device | | SetAgentState<br>• device D6<br>• requestedAgentState loggedOn/loggedOff<br>• group D2 | requestedAgentState ist hier beispielhaft in Anlehnung an die existierenden ECMA Definitionen wie loggedOn/loggedOff/ready/notReady, anders lautende Definitionen sind frei wählbar. |
| User 1 ruft User 2 | DeliveredEvent<br>• connection D2C1<br>• alertingDevice D2\|D6<br>• callingDevice D1<br>• calledDevice D2<br>• lastRedirectionDevice NR<br>• localConnectionInfo Connected<br>• cause newCall | DeliveredEvent<br>• connection D2C1<br>• alertingDevice D2\|D6<br>• callingDevice D1<br>• calledDevice D2<br>• lastRedirectionDevice NR<br>• localConnectionInfo Alerting<br>• cause newCall | UC-ONS-Applikation reflektiert die dynamische Bindung der Verbindung C1. Die Ereignisse (Events) können auf auf das virtuelle Device V3 referenziert werden. |

Fig. 12

Fig. 13

Fig. 14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202011003225 U1
- WO 2014060008 A1
- WO 2007000447 A1
- US 2006177030 A1
- DE 102013008932 A1

**In der Beschreibung aufgeführte Nicht-Patentliteratur**

- *Unify Deutschland: "One Number Service", Youtube,* 03. Dezember 2015